# EUROPÄISCHE PATENTSCHRIFT

(11) **EP 3 989 007 B1**
(45) Veröffentlichungstag und Bekanntmachung des Hinweises auf die Patenterteilung: **06.05.2026**
(21) Anmeldenummer: 21203744.4
(22) Anmeldetag: 20.10.2021
(51) Int. Cl.: G03H 1/00, G03H 1/26, G03H 1/02, G07D 7/00, G06K 19/16

(54) **IDENTITÄTSKARTE SOWIE VERFAHREN ZU DESSEN VERIFIKATION**
IDENTITY CARD AND METHOD FOR ITS VERIFICATION
CARTE D'IDENTITÉ ET PROCÉDÉ DE VÉRIFICATION DE CELLE-CI

(30) Priorität: 22.10.2020 DE 102020127878
(43) Veröffentlichungstag der Anmeldung: 27.04.2022
(73) Patentinhaber: Bundesdruckerei GmbH, 10969 Berlin (DE)
(72) Erfinder: Knebel, Michael, 13086 Berlin (DE); Sprenger, Martin, 10317 Berlin (DE); Dr. Grieser, Ralf, 10589 Berlin (DE); Klünder, Dr. Kathrin, 10179 Berlin (DE); Herrmann, Dr. Klaus, 30625 Hannover (DE); RABELER, Uwe, 30453 Hannover (DE); THATER, Marcel, 30952 Ronnenberg (DE); Cobernuss, Dr. Martin, 30419 Hannover (DE); Hesse, Holger, 30655 Hannover (DE); Holtmann, Alwin, 30451 Hannover (DE)
(74) Vertreter: Hentrich Patent- & Rechtsanwaltspartnerschaft mbB

(56) Entgegenhaltungen:
- DE-A1- 102006 057 123
- DE-A1- 102018 217 560
- US-A1- 2006 181 077

## Beschreibung

Die vorliegende Erfindung betrifft eine Identitätskarte, welche einen Hologrammbereich aufweist, der ein erstes Volumenreflexionshologramm und der ein zweites Volumenreflexionshologramm umfasst. Die Erfindung betrifft außerdem ein Verfahren zur Echtheitsverifikation eines Wert- oder Sicherheitsprodukts in Form einer Identitätskarte.

Wert- oder Sicherheitsdokumente können beispielsweise ein Personaldokument, eine Scheckkarte, ein nicht personalisierter Berechtigungsausweis, wie eine Fahrkarte oder ein Zahlungsmittel, oder ein für die Produktsicherung bestimmtes Wert- oder Sicherheitselement, sein.

Aus dem Stand der Technik ist es bekannt, Hologramme als Sicherheitselemente in Sicherheitsdokumente oder Wertdokumente zu integrieren. Sicherheitselemente sind solche Entitäten, welche mindestens ein Merkmal aufweisen, welches ein unautorisiertes Duplizieren, Nachahmen und/oder Verfälschen eines Gegenstands erschwert, in welchen das Sicherheitselement integriert ist. Hologramme werden als Sicherheitselemente beispielsweise in Reisepässen oder Personalausweisen verwendet. Sie werden jedoch auch in Banknoten, Führerscheinen, Visa, anderen Wertzeichen, Etiketten oder Tickets, Kreditkarten, Bankkarten, Telefonkarten oder Ähnlichem eingesetzt.

Eine besondere Gruppe von Hologrammen stellen Volumenhologramme dar. Bei einem Volumenhologramm ist eine beugende Struktur des Hologramms im Volumen des holografischen Aufzeichnungsmaterials gespeichert. Als Aufzeichnungsmaterialien für Volumenhologramme werden in Wert- und/oder Sicherheitsdokumenten in der Regel holografische Belichtungsfilme eingesetzt, die zumeist auf Rollen bereitgestellt werden. Diese Belichtungsfilme sind geeignet, Interferenzstrukturen zu speichern, deren charakteristische Abmessungen im Bereich der Lichtwellenlänge des Lichts liegen, welches zur Aufzeichnung bzw. Rekonstruktion des Hologramms verwendet wird.

Bei einem Kontaktkopierverfahren wird der holografische Belichtungsfilm vor einem Master angeordnet, in dem beugende Strukturen ausgebildet sind, die in den holografischen Belichtungsfilm "übertragen" werden sollen. Die beugenden Strukturen des Masters werden bei diesem Verfahren somit in den holografischen Film kopiert. Hierfür wird kohärentes Licht durch den holografischen Film, der in unmittelbarer Nähe vor dem Master oder in Kontakt mit dem Master vor diesem angeordnet ist, auf den Master gestrahlt. Die beugenden Strukturen in dem Master beugen das Licht so, dass das gebeugte Licht in den holografischen Film zurückgestrahlt wird. Dort interferiert dieses mit dem kohärenten Licht, welches zur Beleuchtung des Masters genutzt wird. In dem holografischen Film bildet sich somit eine Interferenzstruktur aus, welche durch das an dem Master gebeugte Licht festgelegt ist. Wird der holografische Film entwickelt und rekonstruiert, so gleicht die Rekonstruktion derjenigen, die beim Beleuchten des Masters zu beobachten ist. In dem holografischen Film wird ein Hologramm gespeichert, welches auch als Denisjuk-Hologramm bezeichnet wird und ein Volumenreflexionshologramm ist. Es versteht sich, dass das eingestrahlte Licht eine geeignete Wellenlänge (oder geeignete Wellenlängen) und eine geeignete Einstrahlrichtung (oder geeignete Einstrahlrichtungen) aufweisen muss, so dass eine Beugung an der Beugungsstruktur in der gewünschten Weise erfolgt.

Bei Sicherheits- oder Wertdokumenten eignet sich der Einsatz von aus Volumenhologrammen gebildeten holografischen Merkmalen, da sie besonders geeignet sind, sich bei beispielsweise lotrechter Betrachtung des belichteten und entwickelten holografischen Films verifizieren zu lassen. Eine Einstrahlung des Rekonstruktionslichts erfolgt hierbei vorzugsweise unter einem spitzen Winkel, beispielsweise unter 45 Grad zum Lot. Der Winkel zwischen der Einstrahlrichtung des Rekonstruktionslichts und der Ausfallrichtung des an dem erzeugten Volumenhologramm gebeugten Lichts, welches die Information des Hologramms rekonstruiert, wird im Wesentlichen bei der Herstellung des Masters festgelegt.

In der DE 10 2007 052 952 A1 ist ein Sicherheitsdokument beschrieben, das zwei aneinander angrenzende Volumenreflexionshologramme umfasst, wovon ein erstes Volumenreflexionshologramm aus einer stärker streuenden Schicht und ein zweites Volumenreflexionshologramm aus einer schwächer streuenden Schicht gebildet ist.

Bei beiden Schichten wird die Intensität der Rekonstruktion größer, je näher man sich dem Belichtungsausfallswinkel nähert. Dieses Sicherheitsdokument hat sich in der Praxis gut bewährt und bietet einen adäquaten Schutz vor Produktfälschungen.

In der DE 10 2018 217 560 A1 wird eine Identitätskarte gemäß dem Oberbegriff des Anspruchs 1 beschreiben. Sie zeigt ein Sicherheitsdokument mit einem Sicherheitselement, das mehrere Beugungsstrukturen besitzt, die bei unterschiedlichen Einstrahl- und Rekonstruktionswinkeln optisch erfassbar sind. Dabei wird ein erstes Beugungsbild durch die erste Beugungsstruktur sichtbar, wobei ein zweites Beugungsbild durch die zweite Beugungsstruktur optisch erfassbar ist.

Die US 2006 / 0 181 077 A1 beschreibt ein Wert- oder Sicherheitsdokument in Form einer Banknote, die mit einem Sicherheitselement versehen ist. Diese Druckschrift beschreibt explizit das Wechselspiel von rekonstruierenden Teilen und nichtrekonstruierenden Teilen des Sicherheitselements, wobei sich die Teile auch gegenseitig ergänzen können.

Aus der DE 10 2006 057 123 A1 ist ein Sicherheitselement mit zwei verschiedenen Mustern bekannt, wobei sich das eine Muster in Form von Auslassungen im anderen Muster wiederfindet.

Es besteht das Bedürfnis, holografische Merkmale maschinell zuverlässig auslesen zu können.

Es ist daher die Aufgabe der vorliegenden Erfindung, eine Identitätskarte sowie ein Verfahren zu deren Herstellung anzugeben, die den vorstehend erwähnten Nachteilen Rechnung tragen.

Die vorstehenden Aufgaben werden mit einer Identitätskarte mit dem Merkmalsbestand des Anspruchs 1 sowie einem Verfahren mit dem Merkmalsbestand des Anspruchs 10 gelöst. Vorteilhafte Ausgestaltungen mit zweckmäßigen Weiterbildungen der Erfindung sind in den abhängigen Ansprüchen angegeben.

Das erfindungsgemäß als Identitätskarte gebildete Wert- oder Sicherheitsprodukt zeichnet sich dadurch aus, dass das erste Volumenreflexionshologramm ausgebildet ist, bei einer ersten Rekonstruktionswellenlänge und einer ersten Rekonstruktionseinstrahlrichtung zu rekonstruieren, und dass das zweite Volumenreflexionshologramm ausgebildet ist, bei einer von der ersten Rekonstruktionseinstrahlrichtung abweichenden zweiten Rekonstruktionseinstrahlrichtung zu rekonstruieren.

Auf diese Weise lässt sich ein maschinenprüfbare Absicherung der Personalisierungsdaten, vor allem des Lichtbildes erzielen, da ein Lesegerät mit unterschiedlichen Beleuchtungseinrichtungen oder mit einer Vorrichtung zur Verändern der Winkellage des Wert- oder Sicherheitsprodukts das holografische Sicherheitsmerkmal, insbesondere optisch, erkennen kann.

Das Wert- oder Sicherheitsprodukt kann ein Wert- oder Sicherheitsdokument oder ein Sicherheitselement sein, d.h. ein Element, das beispielsweise mit einem gegen Nachahmung, Fälschung oder Verfälschung zu schützenden Gegenstand verbunden wird, beispielsweise ein Aufkleber, Etikett oder dergleichen. Als Wert- oder Sicherheitsprodukt kommen beispielsweise ein Reisepass, ein Personalausweis, ein Führerschein oder eine andere ID-Karte oder ein Zugangskontrollausweis, ein Fahrzeugschein, ein Fahrzeugbrief, ein Visum, ein Scheck, sonstige Zahlungsmittel, insbesondere eine Banknote, eine Scheck-, eine Bank-, oder eine Kredit- oder Barzahlungskarte, eine Kundenkarte, eine Gesundheitskarte, eine Chipkarte, ein Firmenausweis, ein Berechtigungsnachweis, ein Mitgliedsausweis oder ein anderes ID-Dokument infrage, wobei gewährleistet sein sollte, dass dieses über ein Portraitfoto verfügt oder ein solches daran angebracht ist.

Vorzugsweise liegt das Wert- oder Sicherheitsprodukt in ID 1-, ID 2-, ID 3- oder in irgendeinem anderen Format vor, beispielsweise in Heftform, wie bei einem passähnlichen Gegenstand. Das Wert- oder Sicherheitsprodukt ist im Allgemeinen ein Laminat aus mehreren Dokumentenlagen, die passgenau unter Wärmeeinwirkung und unter erhöhtem Druck flächig miteinander verbunden sind.

Diese Produkte sollen den normierten Anforderungen genügen, beispielsweise ISO 10373, ISO/IEC 7810, ISO 14443.

Vorzugsweise bestehen die Produktlagen aus einem Trägermaterial, das sich für eine Lamination eignet. Das Wert- oder Sicherheitsprodukt kann aber vorzugsweise aus einem Polymer gebildet sein, das ausgewählt ist aus einer Gruppe, umfassend Polycarbonat (PC), insbesondere Bisphenol A-Polycarbonat oder ein Polycarbonat, gebildet mit einem geminal disubstituierten Bis-(hydroxyphenyl)-cycloalkan, Polyethylenterephthalat (PET), deren Derivate, wie Glykol-modifiziertes PET (PETG), Polyethylennaphthalat (PEN), Polyvinylchlorid (PVC), Polyvinylbutyral (PVB), Polymethylmethacrylat (PMMA), Polyimid (PI), Polyvinylalkohol (PVA), Polystyrol (PS), Polyvinylphenol (PVP), Polypropylen (PP), Polyethylen (PE), thermoplastische Elastomere (TPE), insbesondere thermoplastisches Polyurethan (TPU), Acrylnitril-Butadien-Styrol-Copolymer (ABS) sowie deren Derivate, und/oder Papier und/oder Pappe und/oder Glas und/oder Metall und/oder Keramik. Außerdem kann das Produkt auch aus mehreren dieser Materialien hergestellt sein. Bevorzugt besteht es aus PC, PVC und PET. Die Polymere können entweder gefüllt oder ungefüllt vorliegen. Im letzteren Falle sind sie vorzugsweise transparent oder transluzent. Falls die Polymere gefüllt sind, sind sie opak. Die vorstehenden Angaben beziehen sich sowohl auf miteinander zu verbindende Folien als auch auf Flüssigformulierungen, die auf ein Vorprodukt aufgebracht werden, wie einen Schutz- oder Decklack. Bevorzugt wird das Produkt aus drei bis zwölf, vorzugsweise vier bis zehn Folien, hergestellt. Die Folien können ferner Druckschichten tragen. Ein solcherart gebildetes Laminat kann abschließend ein- oder beidseitig mit dem Schutz- oder Decklack oder mit einer Folie überzogen werden. Die Folie kann insbesondere ein Volumenhologramm, eine Folie mit einem Oberflächenhologramm (beispielsweise einem kinegraphischen Element) oder eine Kratzschutzfolie sein. Derart gebildete Overlaylagen schützen ein darunter angeordnetes Sicherheitsmerkmal und/oder verleihen dem Dokument die erforderliche Abriebfestigkeit.

Zur verbesserten Absicherung des Wert- oder Sicherheitsprodukts bei gleichzeitig verbesserter maschineller Auslesbarkeit, hat es sich als vorteilhaft erwiesen, wenn im Hologrammbereich mehr als zwei und damit insbesondere wenigstens ein drittes Volumenreflexionshologramm vorhanden ist, das ausgebildet ist, bei einem von der ersten Rekonstruktionseinstrahlrichtung und von der zweiten Rekonstruktionseinstrahlrichtung abweichenden dritten Rekonstruktionseinstrahlrichtung zu rekonstruieren.

Wenn mehr als zwei der Volumenreflexionshologramme eingesetzt werden, dann wird das aus den mehreren Volumenreflexionshologrammen gebildete Sicherheitsmerkmal in seiner Lage auf dem Substrat oder dem Kartenkörper unabhängiger. Diese Unabhängigkeit verstärkt sich zunehmend durch die Erhöhung an möglichen Rekonstruktionswinkeln/Rekonstruktionseinstrahlrichtungen; mithin also durch die Erhöhung der Anzahl der Volumenreflexionshologramme.

Viele Lesegeräte - insbesondere mit einem Leser zum Einlesen einer Karte im ID1-Format - ermöglichen das "freie" Auflegen der Karte, um diese auszulesen. Das bedeutet, dass für die Karte selbst kein Anschlag vorhanden ist, der die Lage der Karte für das Auslesen festlegen könnte. Somit liegt also beim Einstrahlen ein zunächst undefinierter Winkel vor. In Abhängigkeit des Lage eines rekonstruierenden Volumenreflexionshologrammes kann dann die Lage der Karte bezüglich des Lesers erfasst oder bestimmt werden. Wenn eine Vielzahl unterschiedlicher Volumenreflexionshologramme beim Sicherheitsmerkmal Einsatz finden, so kann anhand des unter Bestrahlung rekonstruierenden (Teil-) Volumenreflexionshologramms auf die Lage des Merkmals geschlossen und gezielt überprüft werden, ob und welche der weiteren (Teil-)Volumenreflexionshologramme bei Einstrahlung unter unterschiedlichen Winkeln rekonstruieren oder nicht. Je höher die Anzahl an (Teil-)Volumenreflexionshologrammen ist, desto höher ist die Wahrscheinlichkeit, dass wenigstens eines davon rekonstruiert, auch wenn die Lage des Hologrammbereichs mit dem Sicherheitsmerkmal zunächst unbekannt wäre.

Eine nochmals verbesserte Auslesbarkeit lässt sich dadurch erzielen, dass wenigstens ein Referenzpunkt vorhanden ist, und dass der auszulesende Hologrammbereich in vorgegebener Relation bezüglich des wenigstens einen Referenzpunkts des Produkts angeordnet ist. In diesem Zuge ist es sinnvoll, wenn der wenigstens eine Referenzpunkt durch wenigstens eine Kartenkante des Produkts gebildet ist. Vorzugsweise sind wenigstens zwei senkrecht zueinander verlaufende Kanten als Referenzpunkte vorgegeben, so dass der zu prüfende Hologrammbereich beispielsweise in einem von vier Quadranten einer Identitätskarte vorliegt.

Es ist die Möglichkeit gegeben, dass die Volumenreflexionshologramme eine identische Form besitzen, was deren maschinelle Erkennung verbessert, da ein Prüfrechner stets auf das Vorliegen desselben Musters prüfen muss, um die Echtheit der Mehrzahl an Volumenreflexionshologrammen zu verifizieren.

In diesem Zuge ist es sinnvoll, wenn die Volumenreflexionshologramme als aneinander unmittelbar angrenzende Polygone gebildet sind. Diese können beispielsweise Dreiecke oder Vierecke, insbesondere Rechtecke oder Quadrate, sein.

Die maschinelle Auswertbarkeit wird aber auch dadurch begünstigt, wenn die Volumenreflexionshologramme als aneinander unmittelbar angrenzende Kreissektoren gebildet sind, deren Spitzen in einem gemeinsamen Punkt liegen.

Um die Komplexität der Prüfung und der Auswertung der Volumenreflexionshologramme möglichst gering zu halten, ist es von Vorteil, wenn die Volumenreflexionshologramme ausgebildet sind, bei derselben Rekonstruktionswellenlänge zu rekonstruieren.

Es ist aber die Möglichkeit gegeben, dass das erste Volumenreflexionshologramm ausgebildet ist, bei einer ersten Rekonstruktionswellenlänge zu rekonstruieren, dass das zweite Volumenreflexionshologramm ausgebildet ist, bei einer von der ersten Rekonstruktionswellenlänge abweichenden zweiten Rekonstruktionswellenlänge zu rekonstruieren, und dass das dritte Volumenreflexionshologramm ausgebildet ist, bei einer von der ersten und der zweiten Rekonstruktionswellenlänge abweichenden dritten Rekonstruktionswellenlänge zu rekonstruieren. Auf diese Weise wird die Fälschungssicherheit erhöht, da bei einem Fälschungsversuch wenigstens drei unterschiedliche Wellenlängen eingesetzt werden müssten, um die Hologramme nachzuahmen.

Es hat sich als besonders fälschungssicher erwiesen, wenn das Wert- oder Sicherheitsprodukt mit einem (gedruckten) Portraitbild versehen ist, und wenn das Portraitbild mit einem Sicherheitsmerkmal abgesichert ist, welches aus den Volumenreflexionshologrammen gebildet ist.

In einer ersten Alternative der Erfindung ist der Hologrammbereich exakt durch die Abmessungen des Portraitbilds vorgegeben. Auf diese Weise lässt sich der Hologrammbereich aufgrund des sichtbaren Portraitbilds sehr präzise und mit einem geringen Aufwand identifizieren und auslesen.

Alternativ oder ergänzend ist die Möglichkeit vorhanden, dass mindestens ein (beispielsweise gedrucktes) Datenfeld mit Personalisierungsdaten vorhanden ist, und dass das Datenfeld mit einem Sicherheitsmerkmal abgesichert ist, welches aus den Volumenreflexionshologrammen gebildet ist.

In einer zweiten Alternative der Erfindung ist der Hologrammbereich exakt durch die Abmessungen des Datenfelds mit Personalisierungsdaten vorgegeben. Auf diese Weise lässt sich der Hologrammbereich aufgrund des sichtbaren Datenfelds sehr präzise und mit einem geringen Aufwand identifizieren und auslesen.

Das erfindungsgemäße Verfahren zur Echtheitsverifikation der Wert- oder Sicherheitsprodukts, umfasst insbesondere die folgenden Schritte:
- Bereitstellen des Wert- oder Sicherheitsprodukts mit einem an einer seiner Oberflächen an einer festen Position vorgegebenen zu überprüfenden Hologrammbereich,
- Bestrahlen des Hologrammbereichs aus einer ersten Rekonstruktionseinstrahlrichtung und prüfen, ob ein erstes Volumenreflexionshologramm rekonstruiert,
- Bestrahlen des Hologrammbereichs unter einer von der ersten Rekonstruktionseinstrahlrichtung abweichenden zweiten Rekonstruktionseinstrahlrichtung und prüfen, ob ein zweites Volumenreflexionshologramm rekonstruiert,
- Bestrahlen des Hologrammbereichs unter einem von der ersten und von der zweiten Rekonstruktionseinstrahlrichtung abweichenden dritten Rekonstruktionseinstrahlrichtung und prüfen, ob ein drittes Volumenreflexionshologramm rekonstruiert, und
- Feststellen einer Produktfälschung, wenn wenigstens eines der Volumenreflexionshologramme im Hologrammbereich nicht rekonstruiert hat.

Auch mit dem Verfahren ist der Vorteil verbunden, dass eine verbesserte maschinelle Auslesbarkeit des Wert- oder Sicherheitsprodukts vorliegt. Die in Zusammenhang mit dem erfindungsgemäßen Wert- oder Sicherheitsprodukt gegebenen Vorteile und vorteilhaften Ausgestaltungen gelten in gleicher Weise für das erfindungsgemäße Verfahren.

Es ist allerdings bevorzugt, wenn die Form jedes der Volumenreflexionshologramme wenigstens eine Kante umfasst, die sich in Form einer Linien, insbesondere einer Prüflinie an einer Kante eines der weiteren Volumenreflexionshologramme fortsetzt, und wenn eine Produktfälschung auch dann festgestellt wird, wenn die Prüflinie nicht oder mit Unterbrechungen vorliegt.

Als Prüflinie ist eine Linie zu verstehen, die mit einem Stift "nachgezogen" werden kann, und die bei einem unverfälschten Wert- oder Sicherheitsprodukt entsteht, wenn die Einzelbilder von jeder optischen Prüfung der drei Volumenreflexionshologramme registergetreu (deckungsgleich) übereinandergelegt werden. Eine solcherart gebildete Prüflinie lässt sich also gezielt auf einen Manipulationsversuch überprüfen, denn im Falle des Auftretens von Stufen, Kanten oder Ecken an der durch die Kanten mehrerer Volumenreflexionshologramme gebildeten Linie ist ein Fälschung erkennbar.

Die vorliegende Erfindung wird nachfolgend anhand von Figuren näher erläutert, wobei die dargestellten Beispiele lediglich exemplarischen Charakter haben und keine Einschränkung hinsichtlich der Tragweite der beschriebenen Erfindung darstellen. Es zeigen im Einzelnen:
- Fig. 1: eine schematische isometrische Darstellung eines Wert- oder Sicherheitsprodukts in Form einer Identitätskarte,
- Fig. 2: eine schematische Schnittansicht der Identitätskarte entlang der Linie I-I,
- Fig. 3a: das stark schematisierte Wert- oder Sicherheitsprodukt, dessen Hologrammbereich mit drei quadratischen Volumenreflexionshologrammen versehen ist, und das aus einer ersten Rekonstruktionseinstrahlrichtung derart bestrahlt wird, dass das erste Volumenreflexionshologramm rekonstruiert,
- Fig. 3b: das stark schematisierte Wert- oder Sicherheitsprodukt aus Figur 3a, dessen Hologrammbereich - aufgrund der illustrierten Verkippung - aus einer zweiten Rekonstruktionseinstrahlrichtung derart bestrahlt wird, dass das zweite Volumenreflexionshologramm rekonstruiert,
- Fig. 3c: das stark schematisierte Wert- oder Sicherheitsprodukt aus Figur 3a, dessen Hologrammbereich - aufgrund der illustrierten weitergehenden Verkippung - aus einer zweiten Rekonstruktionseinstrahlrichtung derart bestrahlt wird, dass das dritte Volumenreflexionshologramm rekonstruiert,
- Fig. 4a: das stark schematisierte Wert- oder Sicherheitsprodukt, dessen Hologrammbereich mit drei kuchenstückförmigen Volumenreflexionshologrammen versehen ist, und das aus einer ersten Rekonstruktionseinstrahlrichtung derart bestrahlt wird, dass das erste Volumenreflexionshologramm rekonstruiert,
- Fig. 4b: das stark schematisierte Wert- oder Sicherheitsprodukt aus Figur 4a, dessen Hologrammbereich - aufgrund der illustrierten Verkippung - aus einer zweiten Rekonstruktionseinstrahlrichtung derart bestrahlt wird, dass das zweite Volumenreflexionshologramm rekonstruiert,
- Fig. 4c: das stark schematisierte Wert- oder Sicherheitsprodukt aus Figur 4a, dessen Hologrammbereich - aufgrund der illustrierten weitergehenden Verkippung - aus einer zweiten Rekonstruktionseinstrahlrichtung derart bestrahlt wird, dass das dritte Volumenreflexionshologramm rekonstruiert,
- Figur 5: eine schematische Darstellung einer Vorrichtung zur Rekonstruktion und Erfassung des aus Hologrammen gebildeten Sicherheitsmerkmals des Wert- oder Sicherheitsprodukts,
- Fig. 6a: die entstehenden Prüflinien der Hologramme aus Figuren 3a bis 3c, und
- Fig. 6b: die entstehenden Prüflinien der Hologramme aus Figuren 4a bis 4c.

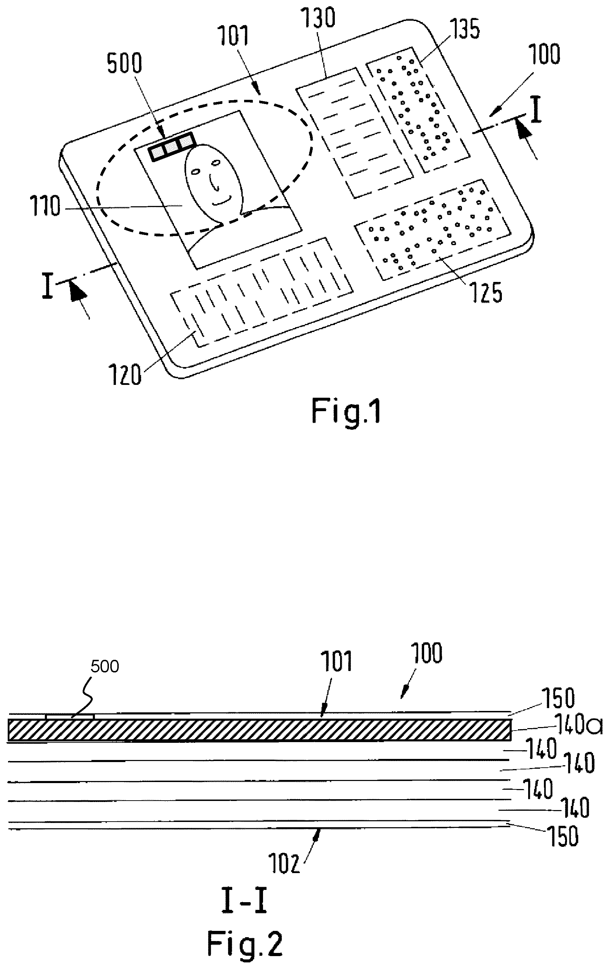

In Figur 1 ist ein mit einem Sicherheitsmerkmal 500 versehenes Wert- oder Sicherheitsprodukt 100 gezeigt. Das Wert- oder Sicherheitsdokument 100 kann ein Personaldokument, wie ein Reisepass, ein Personalausweis, ein Zugangsausweis oder dergleichen sein. Alle nachfolgenden Beispiele werden stellvertretend für andere Dokumententypen anhand einer derartigen Karte beschrieben.

In den Figuren 1 und 2 ist das Wert- oder Sicherheitsprodukt 100 in Form einer Identitätskarte dargestellt, die beispielsweise als Laminat aus mehreren innenliegenden Polymerlagen 140 zusammengefügt worden ist. Beispielsweise können die Polymerlagen aus PC und/oder PET bestehen. Die einzelnen Lagen können ungefüllt oder mit Füllstoffen gefüllt sein. In letzterem Falle sind sie opak, ansonsten transparent. Die Lagen können vorzugsweise derart miteinander verbunden sein, dass sie einen monolithischen Block bilden, der praktisch nicht gespalten werden kann.

In Figur 2 sind nur zur Veranschaulichung die vor dem Laminieren noch vereinzelten Lagen sichtbar dargestellt. Im fertigen Laminat sind die Grenzflächen nicht mehr sichtbar. Die äußeren Schichten 150 der Karte können als eine abschließende Kunststoff-Schutzfolie gebildet sein oder aus einem Schutzlack bestehen, der nach dem Laminieren auf die Karte aufgetragen worden ist. Die Kunststoff-Schutzfolie bzw. der Schutzlack sind transparent, sodass darunter liegende Informationen von außen sichtbar sind. Insbesondere bleiben dabei aber eine oder mehreren Druckschichten 140a bspw. eines Portraitbilds 110 sichtbar, die vorzugsweise unmittelbar neben oder hinter der äußeren Schicht 150 angeordnet ist bzw. angeordnet sind.

Das Wert- oder Sicherheitsprodukt 100 weist eine Oberseite 101 und eine Unterseite 102 auf. Auf der Oberseite 101 befinden sich das Gesichts- oder Portraitbild 110 des Inhabers der Karte sowie Datenfelder, nämlich beispielsweise ein erstes Datenfeld 120 und ein zweites Datenfeld 130 mit Karten- und Inhaberdaten in Klarschrift. Die Daten im ersten und im zweiten Datenfeld 120, 130 sind durch Druckschichten hergestellt, die auf einer äußeren Lage des Dokuments, aber unmittelbar unter der außenliegenden Schutzschicht 150, liegen. Die Daten in einem dritten Datenfeld 125 und in einem vierten Datenfeld 135 geben die in Klarschrift vorliegenden Personalisierungsdaten nochmals in Braille-Schrift wieder.

Es ist zu erkennen, dass dem Portraitbild 110 zu dessen Absicherung ein Sicherheitsmerkmal 500 zugewiesen ist, welches vorliegend in Form eines Identigram (eine eingetragene Marke der Anmelderin) aus mehreren Hologrammen gebildet ist. Das Sicherheitsmerkmal 500 kann aber auch zur Absicherung anderer Personalisierungsdaten genutzt werden, beispielsweise im Bereich eines der Datenfelder 120, 125, 130, 135.

Um die Identitätskarte maschinell auslesen zu können, wird ein strichliert dargestellter Hologrammbereich 502 festgelegt, in welchem eine Vorrichtung zur Erfassung des Sicherheitsmerkmals 500 das Vorliegen des Sicherheitsmerkmals 500 erwartet. Die Lage des Hologrammbereichs 502 ist festgelegt in Relation auf einen fest vorgegebenen Referenzpunkt des Wert- oder Sicherheitsprodukts 100. Dieser feste Referenzpunkt wird vorliegend durch die Position des Portraitbilds 110 vorgegeben. Es können mehrere solcher Referenzpunkte vorhanden sein, wobei in als Referenz auch wenigstens eine Kartenkante des Produkts herangezogen werden kann.

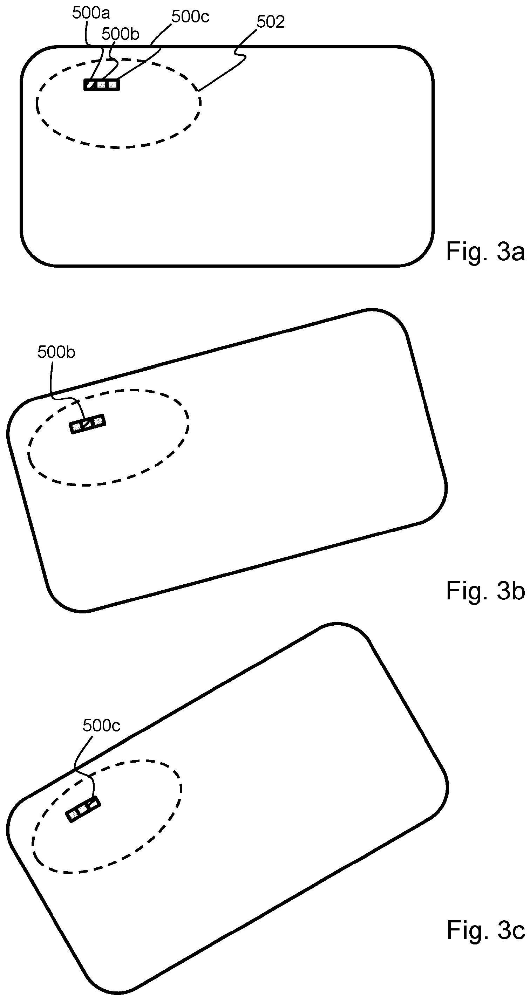

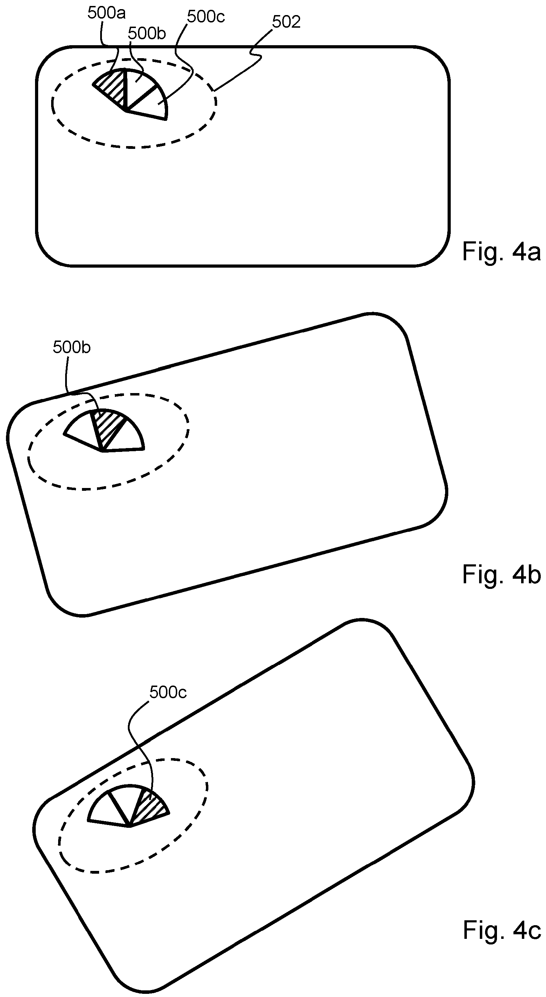

Auf diesen Hologrammbereich 502 wird anhand der Figuren 3 bis 5 näher eingegangen. Im Hologrammbereich 502 liegt ein erstes Volumenreflexionshologramm 500a, ein zweites Volumenreflexionshologramm 500b und ein drittes Volumenreflexionshologramm 500c vor. Alle Volumenreflexionshologramme 500a, 500b, 500c besitzen eine identische Form. Sie sind ausweislich des Beispiels nach Figuren 3a bis 3c aus Polygonen, insbesondere aus aneinander unmittelbar angrenzende Quadrate gebildet. Ausweislich des Beispiels nach Figuren 4a bis 4c sind die Volumenreflexionshologramme 500a, 500b, 500c aus aneinander unmittelbar angrenzende Kreissektoren gebildet, deren Spitzen in einem gemeinsamen Punkt liegen. Die Lage des Punkts kann wiederum eine vordefinierte Position des Wert- oder Sicherheitsprodukts 100 sein und als solche selbst ein Sicherheitsmerkmal darstellen.

Das erste Volumenreflexionshologramm 500a ist ausgebildet, bei einer ersten Rekonstruktionswellenlänge und einem ersten Rekonstruktionswinkel aus einer ersten Rekonstruktionseinstrahlrichtung zu rekonstruieren und das zweite Volumenreflexionshologramm 500b ist ausgebildet, bei einem vom ersten Rekonstruktionswinkel und von der ersten Rekonstruktionseinstrahlrichtung abweichenden zweiten Rekonstruktionswinkel aus einer zweiten Rekonstruktionseinstrahlrichtung zu rekonstruieren. Das dritte Volumenreflexionshologramm 500c ist ausgebildet, bei einem vom ersten Rekonstruktionswinkel, von der ersten Rekonstruktionseinstrahlrichtung, vom zweiten Rekonstruktionswinkel sowie von der zweiten Rekonstruktionseinstrahlrichtung abweichenden dritten Rekonstruktionswinkel aus einer dritten Rekonstruktionseinstrahlrichtung zu rekonstruieren. In den Figuren 3a bis 3c und in den Figuren 4a bis 4c ist dies durch die Schraffur illustriert, welche das jeweils rekonstruierende Volumenreflexionshologramm 500a, 500b, 500c darstellt; jeweils bei unterschiedlicher Winkellage des Wert- oder Sicherheitsprodukts 100.

Vorliegend sind die Volumenreflexionshologramme 500a, 500b, 500c ausgebildet, bei derselben Rekonstruktionswellenlänge zu rekonstruieren. In einer anderen Ausgestaltung ist das erste Volumenreflexionshologramm 500a ausgebildet, bei einer ersten Rekonstruktionswellenlänge zu rekonstruieren, wobei das zweite Volumenreflexionshologramm 500b ausgebildet ist, bei einer von der ersten Rekonstruktionswellenlänge abweichenden zweiten Rekonstruktionswellenlänge zu rekonstruieren, und wobei das dritte Volumenreflexionshologramm 500c ausgebildet ist, bei einer von der ersten und der zweiten Rekonstruktionswellenlänge abweichenden dritten Rekonstruktionswellenlänge zu rekonstruieren.

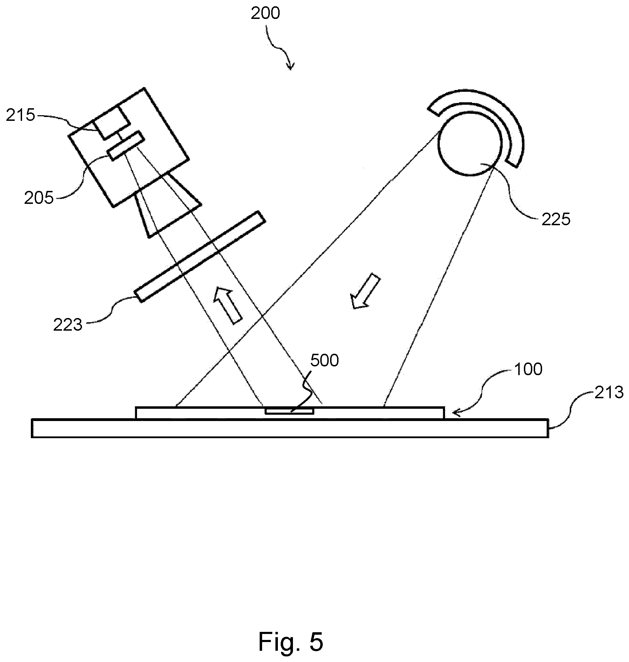

Figur 5 zeigt eine schematische Darstellung einer Vorrichtung 200 zur Rekonstruktion und Erfassung des aus Hologrammen gebildeten Sicherheitsmerkmals 500 des Wert- oder Sicherheitsprodukts 100. Die Vorrichtung 200 umfasst einen Bildsensor 205, eine Beleuchtungseinrichtung mit einer Lichtquelle 225, eine Halterung 213 für das Wert- oder Sicherheitsprodukt 100, einen Prozessor 215, der mit dem Bildsensor 205 in einer Kommunikationsverbindung steht. Die Lichtquelle 225 ist ausgebildet, sichtbares oder nicht-sichtbares Licht aus unterschiedlichen Winkeln und/oder aus unterschiedlichen Rekonstruktionseinstrahlrichtungen auf das Sicherheitselement 500 zu bestrahlen. Um einen weiteren Einstrahlwinkel oder eine weitere Einstrahlrichtung bereitzustellen kann alternativ oder ergänzend auch eine zweite Lichtquelle 225 vorhanden sein. Um einen nochmals weiteren Einstrahlwinkel oder eine dritte Einstrahlrichtung bereitzustellen kann alternativ oder ergänzend auch eine dritte Lichtquelle 225 vorhanden sein.

Um die Echtheit des Wert- oder Sicherheitsprodukts 100 zu verifizieren, wird zunächst das Wert- oder Sicherheitsprodukts 100 mit seinem fest vorgegebenen Hologrammbereich 502 an einer seiner Oberflächen bereitgestellt. Dann wird der Hologrammbereich 502 aus einer ersten Rekonstruktionseinstrahlrichtung unter einem ersten Rekonstruktionswinkel bezüglich der Normalen der Oberfläche bestrahlt und geprüft, ob das erste Volumenreflexionshologramm 500a rekonstruiert. Anschließend wird der Hologrammbereich 502 aus einer von der ersten Rekonstruktionseinstrahlrichtung abweichenden zweiten Rekonstruktionseinstrahlrichtung, insbesondere unter einem vom ersten Rekonstruktionswinkel abweichenden zweiten Rekonstruktionswinkel bezüglich der Normalen der Oberfläche, bestrahlt und geprüft, ob das zweite Volumenreflexionshologramm 500b rekonstruiert. Anschließend wird der Hologrammbereich 502 aus einer von der ersten Richtung und der zweiten Richtung abweichenden dritten Rekonstruktionseinstrahlrichtung, insbesondere unter einem vom ersten und vom zweiten Rekonstruktionswinkel abweichenden dritten Rekonstruktionswinkel, bestrahlt und geprüft, ob das dritte Volumenreflexionshologramm 500c rekonstruiert, wobei eine Produktfälschung festgestellt wird, wenn wenigstens eines der Volumenreflexionshologramme 500a, 500b, 500c im Hologrammbereich 502 nicht rekonstruierte.

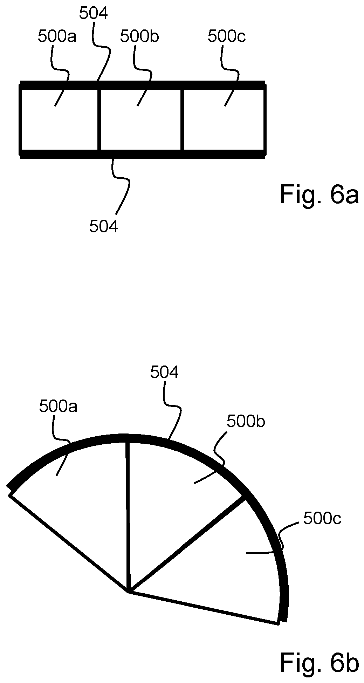

Ausweislich von Figuren 6a und 6b weisen die gezeigten Hologramme eine weitere Besonderheit auf, die deshalb zustande kommt, weil die Volumenreflexionshologramme 500a, 500b, 500c unmittelbar aneinander angrenzen.

Sie bilden bei deckungsgleicher Überlagerung der bei der jeweiligen Prüfung erfassten Bilder der jeweils rekonstruierenden Volumenreflexionshologramme 500a, 500b, 500c wenigstens eine Prüflinie 504 aus, die in den Figuren fett hervorgehoben wurde. Diese Linie ist ohne Stufen, Ecken oder Kanten geformt, so womit darauf geschlossen werden kann, dass kein Manipulationsversuch an dem durch drei Hologramme gebildeten Sicherheitsmerkmal erfolgt ist. Während bei den in Figuren 3a bis 3c gezeigten Hologrammen zwei parallel zueinander und geradlinig verlaufende Prüflinien 504 vorliegen, verläuft die Prüflinie 504 der in Figuren 4a bis 4c gezeigten Hologramme kreisbogenförmig.

Diese Prüflinie 504 birgt eine weitere Möglichkeit der Verbesserung der Fälschungssicherheit, denn die Form jedes der Volumenreflexionshologramme 500a, 500b, 500c umfasst wenigstens eine Kante, die sich in Form der Prüflinie 504 an einer Kante eines der weiteren Volumenreflexionshologramme 500a, 500b, 500c fortsetzt, wobei eine Produktfälschung auch dann festgestellt wird, wenn die Prüflinie 504 nicht oder mit Unterbrechungen vorliegt.

Die Gestaltung der Hologramme nach Figuren 3a bis 3c bietet einen weiteren Vorteil, der zur Absicherung beiträgt, denn wenn die Prüflinien 504 nicht in einem vorgegeben festen Abstand voneinander verlaufen, ist ebenfalls auf eine Fälschung des Wert- oder Sicherheitsprodukts 100 zu schließen.

Die Gestaltung der Hologramme nach Figuren 4a bis 4c bietet eine andere vorteilhafte Möglichkeit der zusätzlichen Absicherung des Wert- oder Sicherheitsprodukts 100. Hierbei ist der Abstand des Punktes des Spitze bis zur kreisbogenförmigen Prüflinie 504 als Sicherheitsmerkmal fest vorgeben.

### BEZUGSZEICHENLISTE

- 100: Wert- oder Sicherheitsprodukt
- 101: obere Substratoberfläche, obere Kartenoberfläche, Oberseite
- 102: untere Substratoberfläche, untere Kartenoberfläche, Unterseite
- 110: Gesichtsbild
- 120: erstes Datenfeld
- 130: zweites Datenfeld
- 125: drittes Datenfeld
- 135: viertes Datenfeld
- 140: innenliegende Polymerlagen
- 140a: Druckschicht
- 150: äußere Schutzschicht
- 500: Sicherheitsmerkmal
- 500a: erstes Volumenreflexionshologramm
- 500b: zweites Volumenreflexionshologramm
- 500c: drittes Volumenreflexionshologramm
- 502: Hologrammbereich
- 504: Prüflinie

## Patentansprüche

1. Identitätskarte, welche einen Hologrammbereich (502) aufweist, der ein erstes Volumenreflexionshologramm (500a) und der ein zweites Volumenreflexionshologramm (500b) umfasst, wobei das erste Volumenreflexionshologramm (500a) ausgebildet ist, bei einer ersten Rekonstruktionswellenlänge und einer ersten Rekonstruktionseinstrahlrichtung zu rekonstruieren, und dass das zweite Volumenreflexionshologramm (500b) ausgebildet ist, bei einer von der ersten Rekonstruktionseinstrahlrichtung abweichenden zweiten Rekonstruktionseinstrahlrichtung zu rekonstruieren, **dadurch gekennzeichnet,**
**dass** ein Portraitbild (110) vorhanden ist, und dass das Portraitbild (110) mit einem Sicherheitsmerkmal (500) abgesichert ist, welches aus den Volumenreflexionshologrammen (500a, 500b, 500c) gebildet ist, wobei der Hologrammbereich (502) exakt durch die Abmessungen des Portraitbilds (110) vorgeben ist,
oder
**dass** mindestens ein Datenfeld (120, 125, 130, 135) mit Personalisierungsdaten vorhanden ist, und dass das Datenfeld (120, 125, 130, 135) mit einem Sicherheitsmerkmal (500) abgesichert ist, welches aus den Volumenreflexionshologrammen (500a, 500b, 500c) gebildet ist, wobei der Hologrammbereich (502) exakt durch die Abmessungen des Datenfelds (120, 125, 130) mit Personalisierungsdaten vorgegeben ist.

2. Identitätskarte nach Anspruch 1, **dadurch gekennzeichnet, dass** im Hologrammbereich (502) wenigstens ein drittes Volumenreflexionshologramm (500c) vorhanden ist, das ausgebildet ist, bei einem von der ersten Rekonstruktionseinstrahlrichtung und von der zweiten Rekonstruktionseinstrahlrichtung abweichenden dritten Rekonstruktionseinstrahlrichtung zu rekonstruieren.

3. Identitätskarte nach Anspruch 1 oder 2, **dadurch gekennzeichnet, dass** wenigstens ein Referenzpunkt vorhanden ist, und dass der Hologrammbereich (502) in vorgegebener Relation bezüglich des wenigstens einen Referenzpunkts des Produkts angeordnet ist.

4. Identitätskarte nach Anspruch 3, **dadurch gekennzeichnet**, der wenigstens eine Referenzpunkt durch wenigstens eine Kartenkante des Produkts gebildet ist.

5. Identitätskarte nach einem der Ansprüche 1 bis 4, **dadurch gekennzeichnet, dass** die Volumenreflexionshologramme (500a, 500b, 500c) eine identische Form besitzen.

6. Identitätskarte nach Anspruch 5, **dadurch gekennzeichnet, dass** die Volumenreflexionshologramme (500a, 500b, 500c) als aneinander unmittelbar angrenzende Polygone gebildet sind.

7. Identitätskarte nach Anspruch 6, **dadurch gekennzeichnet, dass** die Volumenreflexionshologramme (500a, 500b, 500c) als aneinander unmittelbar angrenzende Kreissektoren gebildet sind, deren Spitzen in einem gemeinsamen Punkt liegen.

8. Identitätskarte nach einem der Ansprüche 1 bis 7, **dadurch gekennzeichnet, dass** die Volumenreflexionshologramme (500a, 500b, 500c) ausgebildet sind, bei derselben Rekonstruktionswellenlänge zu rekonstruieren.

9. Identitätskarte nach einem der Ansprüche 2 bis 8, **dadurch gekennzeichnet, dass** das erste Volumenreflexionshologramm (500a) ausgebildet ist, bei einer ersten Rekonstruktionswellenlänge zu rekonstruieren, dass das zweite Volumenreflexionshologramm (500b) ausgebildet ist, bei einer von der ersten Rekonstruktionswellenlänge abweichenden zweiten Rekonstruktionswellenlänge zu rekonstruieren, und dass das dritte Volumenreflexionshologramm (500c) ausgebildet ist, bei einer von der ersten und der zweiten Rekonstruktionswellenlänge abweichenden dritten Rekonstruktionswellenlänge zu rekonstruieren.

10. Verfahren zur Echtheitsverifikation einer Identitätskarte nach einem der Ansprüche 2 bis 9, umfassend die Schritte:
- Bereitstellen der Identitätskarte mit einem an einer seiner Oberflächen an einer festen Position vorgegebenen zu überprüfenden Hologrammbereich (502),
- Bestrahlen des Hologrammbereichs (502) aus einer ersten Rekonstruktionseinstrahlrichtung und Prüfen, ob ein erstes Volumenreflexionshologramm (500a) rekonstruiert,
- Bestrahlen des Hologrammbereichs (502) unter einer von der ersten Rekonstruktionseinstrahlrichtung abweichenden zweiten Rekonstruktionseinstrahlrichtung und Prüfen, ob ein zweites Volumenreflexionshologramm (500b) rekonstruiert,
- Bestrahlen des Hologrammbereichs (502) unter einem von der ersten und von der zweiten Rekonstruktionseinstrahlrichtung abweichenden dritten Rekonstruktionseinstrahlrichtung und Prüfen, ob ein drittes Volumenreflexionshologramm (500c) rekonstruiert, und
- Feststellen einer Produktfälschung, wenn wenigstens eines der Volumenreflexionshologramme (500a, 500b, 500c) im Hologrammbereich (502) nicht rekonstruiert hat,
**dadurch gekennzeichnet,**
**dass** ein Portraitbild (110) auf der Identitätskarte vorhanden ist, und dass das Portraitbild (110) mit einem Sicherheitsmerkmal (500) abgesichert ist, welches aus den Volumenreflexionshologrammen (500a, 500b, 500c) gebildet ist, wobei der Hologrammbereich (502) exakt durch die Abmessungen des Portraitbilds (110) vorgeben ist,
oder
**dass** mindestens ein Datenfeld (120, 125, 130, 135) mit Personalisierungsdaten an der Identitätskarte vorhanden ist, und dass das Datenfeld (120, 125, 130, 135) mit einem Sicherheitsmerkmal (500) abgesichert ist, welches aus den Volumenreflexionshologrammen (500a, 500b, 500c) gebildet ist, wobei der Hologrammbereich (502) exakt durch die Abmessungen des Datenfelds (120, 125, 130) mit Personalisierungsdaten vorgegeben ist.

11. Verfahren nach Anspruch 10, **dadurch gekennzeichnet, dass** die Form jedes der Volumenreflexionshologramme wenigstens eine Kante umfasst, die sich in Form einer Prüflinie (504) an einer Kante eines der weiteren Volumenreflexionshologramme (500a, 500b, 500c) fortsetzt, und dass eine Produktfälschung auch dann festgestellt wird, wenn die Prüflinie (504) nicht oder mit Unterbrechungen vorliegt.

## Claims

1. An identity card comprising a hologram area (502) comprising a first volume reflection hologram (500a) and a second volume reflection hologram (500b), wherein the first volume reflection hologram (500a) is designed to be reconstructed at a first reconstruction wavelength and a first reconstruction beam direction, and that the second volume reflection hologram (500b) is designed to reconstruct at a second reconstruction beam direction that differs from the first reconstruction beam direction,
**characterized in**
**that** a portrait image (110) is present, and that the portrait image (110) is secured with a security feature (500) which is formed from the volume reflection holograms (500a, 500b, 500c), wherein the hologram area (502) is precisely defined by the dimensions of the portrait image (110),
or
**that** at least one data field (120, 125, 130, 135) with personalization data is present, and that the data field (120, 125, 130, 135) is secured with a security feature (500) which is formed from the volume reflection holograms (500a, 500b, 500c), wherein the hologram area (502) is precisely defined by the dimensions of the data field (120, 125, 130) containing personalization data.

2. The identity card according to claim 1, **characterized in that** at least one third volume reflection hologram (500c) is present in the hologram area (502), which is designed to reconstruct at a third reconstruction beam direction that deviates from the first reconstruction beam direction and the second reconstruction beam direction.

3. The identity card according to claim 1 or 2, **characterized in that** at least one reference point is present and that the hologram area (502) is arranged in a predetermined relation with respect to the at least one reference point of the product.

4. The identity card according to claim 3, **characterized in that** the at least one reference point is formed by at least one card edge of the product.

5. The identity card according to any one of claims 1 to 4, **characterized in that** the volume reflection holograms (500a, 500b, 500c) have an identical shape.

6. The identity card according to claim 5, **characterized in that** the volume reflection holograms (500a, 500b, 500c) are formed as polygons directly adjacent to one another.

7. The identity card according to claim 6, **characterized in that** the volume reflection holograms (500a, 500b, 500c) are formed as circular sectors directly adjacent to one another, whose vertices lie at a common point.

8. The identity card according to any one of claims 1 to 7, **characterized in that** the volume reflection holograms (500a, 500b, 500c) are designed to reconstruct at the same reconstruction wavelength.

9. The identity card according to any one of claims 2 to 8, **characterized in that** the first volume reflection hologram (500a) is designed to reconstruct at a first reconstruction wavelength, the second volume reflection hologram (500b) is designed to reconstruct at a second reconstruction wavelength that differs from the first reconstruction wavelength, and that the third volume reflection hologram (500c) is designed to reconstruct at a third reconstruction wavelength that differs from the first and second reconstruction wavelengths.

10. A method for verifying the authenticity of an identity card according to any one of claims 2 to 9, comprising the steps of:
- providing the identity card with a hologram area (502) to be verified which is predetermined at a fixed position on one of its surfaces,
- irradiating the hologram area (502) from a first reconstruction beam direction and checking whether a first volume reflection hologram (500a) is reconstructed,
- irradiating the hologram area (502) in a second reconstruction beam direction that differs from the first reconstruction beam direction and checking whether a second volume reflection hologram (500b) is reconstructed,
- irradiating the hologram area (502) under a third reconstruction beam direction deviating from the first and second reconstruction beam directions and checking whether a third volume reflection hologram (500c) is reconstructed, and
- detecting a counterfeit product if at least one of the volume reflection holograms (500a, 500b, 500c) has not been reconstructed in the hologram area (502),
**characterized in that**
that a portrait image (110) is present on the identity card, and that the portrait image (110) is secured with a security feature (500) formed from the volume reflection holograms (500a, 500b, 500c), wherein the hologram area (502) is precisely defined by the dimensions of the portrait image (110), or
that at least one data field (120, 125, 130, 135) with personalization data is present on the identity card, and that the data field (120, 125, 130, 135) is secured with a security feature (500) which is formed from the volume reflection holograms (500a, 500b, 500c), wherein the hologram area (502) is precisely defined by the dimensions of the data field (120, 125, 130) containing personalization data.

11. The method according to claim 10, **characterized in that** the shape of each of the volume reflection holograms comprises at least one edge which continues in the form of a test line (504) at an edge of one of the other volume reflection holograms (500a, 500b, 500c), and that product counterfeiting is also detected if the test line (504) is not present or is present with interruptions.

## Revendications

1. Carte d'identité qui présente une zone d'hologramme (502) qui comprend un premier hologramme de réflexion en volume (500a) et qui comprend un deuxième hologramme de réflexion en volume (500b), dans laquelle le premier hologramme de réflexion en volume (500a) est configuré afin de se reconstruire à une première longueur d'onde de reconstruction et un premier sens de rayonnement de reconstruction, et en ce que le deuxième hologramme de réflexion en volume (500b) est configuré afin de se reconstruire à un deuxième sens de rayonnement de reconstruction différent du premier sens de rayonnement de reconstruction,
**caractérisée en ce que**
une image portrait (110) est présente, et **en ce que** l'image portrait (110) est sécurisée avec une caractéristique de sécurité (500) qui est formée à partir des hologrammes de réflexion en volume (500a, 500b, 500c), dans laquelle la zone d'hologramme (502) est prédéfinie exactement par les dimensions de l'image portrait (110),
ou
au moins un champ de données (120, 125, 130, 135) avec données de personnalisation est présent, et **en ce que** le champ de données (120, 125, 130, 135) est sécurisé avec une caractéristique de sécurité (500) qui est formée à partir des hologrammes de réflexion en volume (500a, 500b, 500c), dans laquelle la zone d'hologramme (502) est prédéfinie exactement par les dimensions du champ de données (120, 125, 130) avec données de personnalisation.

2. Carte d'identité selon la revendication 1, **caractérisée en ce qu'**au moins un troisième hologramme de réflexion en volume (500c) est présent dans la zone d'hologramme (502), hologramme qui est configuré afin de se reconstruire à un troisième sens de rayonnement de reconstruction différent du premier sens de rayonnement de reconstruction et du deuxième sens de rayonnement de reconstruction.

3. Carte d'identité selon la revendication 1 ou 2, **caractérisée en ce qu'**au moins un point de référence est présent, et **en ce que** la zone d'hologramme (502) est agencée en relation prédéfinie par rapport à l'au moins un point de référence du produit.

4. Carte d'identité selon la revendication 3, **caractérisée en ce que** le au moins un point de référence est formé par au moins un bord de carte du produit.

5. Carte d'identité selon l'une quelconque des revendications 1 à 4, **caractérisée en ce que** les hologrammes de réflexion en volume (500a, 500b, 500c) possèdent une forme identique.

6. Carte d'identité selon la revendication 5, **caractérisée en ce que** les hologrammes de réflexion en volume (500a, 500b, 500c) sont formés comme des polygones directement contigus les uns aux autres.

7. Carte d'identité selon la revendication 6, **caractérisée en ce que** les hologrammes de réflexion en volume (500a, 500b, 500c) sont formés comme des secteurs circulaires directement contigus les uns aux autres, dont les pointes se trouvent en un point commun.

8. Carte d'identité selon l'une quelconque des revendications 1 à 7, **caractérisée en ce que** les hologrammes de réflexion en volume (500a, 500b, 500c) sont configurés afin de se reconstruire à la même longueur d'onde de reconstruction.

9. Carte d'identité selon l'une quelconque des revendications 2 à 8, **caractérisée en ce que** le premier hologramme de réflexion en volume (500a) est configuré afin de se reconstruire à une première longueur d'onde de reconstruction, **en ce que** le deuxième hologramme de réflexion en volume (500b) est configuré afin de se reconstruire à une deuxième longueur d'onde de reconstruction différente de la première longueur d'onde de reconstruction, et **en ce que** le troisième hologramme de réflexion en volume (500c) est configuré afin de se reconstruire à une troisième longueur d'onde de reconstruction différente de la première et de la deuxième longueur d'onde de reconstruction.

10. Procédé de vérification de l'authenticité d'une carte d'identité selon l'une quelconque des revendications 2 à 9, comprenant les étapes suivantes :
- la fourniture de la carte d'identité avec une zone d'hologramme (502) prédéfinie à vérifier au niveau d'une de ses surfaces dans une position fixe,
- l'irradiation de la zone d'hologramme (502) à partir d'un premier sens de rayonnement de reconstruction et la vérification établissant si un premier hologramme de réflexion en volume (500a) se reconstruit,
- l'irradiation de la zone d'hologramme (502) sous un deuxième sens de rayonnement de reconstruction différent du premier sens de rayonnement de reconstruction et la vérification établissant si un deuxième hologramme de réflexion en volume (500b) se reconstruit,
- l'irradiation de la zone d'hologramme (502) sous un troisième sens de rayonnement de reconstruction différent du premier et du deuxième sens de rayonnement de reconstruction et la vérification établissant si un troisième hologramme de réflexion en volume (500c) se reconstruit et
- la constatation d'une contrefaçon, lorsqu'au moins un des hologrammes de réflexion en volume (500a, 500b, 500c) ne s'est pas reconstruit dans la zone d'hologramme (502),
**caractérisé en ce que**
une image portrait (110) est présente sur la carte d'identité, et **en ce que** l'image portrait (110) est sécurisée avec une caractéristique de sécurité (500) qui est formée à partir des hologrammes de réflexion en volume (500a, 500b, 500c), dans lequel la zone d'hologramme (502) est prédéfinie exactement par les dimensions de l'image portrait (110),
ou
au moins un champ de données (120, 125, 130, 135) avec données de personnalisation est présent au niveau de la carte d'identité, et **en ce que** le champ de données (120, 125, 130, 135) est sécurisé avec une caractéristique de sécurité (500) qui est formée à partir des hologrammes de réflexion en volume (500a, 500b, 500c), dans lequel la zone d'hologramme (502) est prédéfinie exactement par les dimensions du champ de données (120, 125, 130) avec données de personnalisation.

11. Procédé selon la revendication 10, **caractérisé en ce que** la forme de chacun des hologrammes de réflexion en volume comprend au moins un bord qui se prolonge sous la forme d'une ligne de vérification (504) au niveau d'un bord d'un des autres hologrammes de réflexion en volume (500a, 500b, 500c), et **en ce qu'**une contrefaçon est aussi constatée lorsque la ligne de vérification (504) n'existe pas ou existe avec des interruptions.
